# EUROPEAN PATENT SPECIFICATION

(11) **EP 0 436 057 B1**
(45) Date of publication and mention of the grant of the patent: **04.05.1994**
(21) Application number: 90100179.2
(22) Date of filing: 05.01.1990
(51) Int. Cl.: G11B 33/04

(54) **Storage system for compact-discs**
Lagerungssystem für kompakte Platten
Système de rangement pour disques compacts

(43) Date of publication of application: 10.07.1991
(73) Proprietor: BEAC SARL, L-5366 Munsbach (LU)
(72) Inventor: Huys, Erwin, B-8500 Kortrijk (BE)
(74) Representative: Vanderperre, Robert

(56) References cited:
- EP-A- 0 155 601
- EP-A- 0 263 227
- EP-A- 0 334 457
- CH-A- 663 529
- DE-U- 8 900 102
- DE-U- 8 910 467
- US-A- 4 741 438

## Description

The present invention relates to a storage system for storing compact disc cartridges comprising a tray-shaped bottom part provided with separation means forming compartments, each of them being able to accommodate one single compact disc cartridge in a substantially upright position, the system being able to accommodate both single and double CD cartridges in an oblique parallel position.

Various storage systems for compact disc (CD) cartridges are known. One prior art system is known from DE-U-8900102. The storage system shown therein comprises a tray-shaped bottom plate provided with a number of parallel pairs of detachable separation pins wherein the adjacent pairs of separation pins define compartments able to accommodate each a single CD cartridge. In this known system a double CD cartridge can be accommodated only when one pair of opposed separation pins are removed.

Another prior art system is known from DE-U-8910467. The storage system shown therein comprises a tray-shaped bottom part provided with alternate first and second sets of separation means defining first and second compartments respectively. The first compartments are sized to accommodate single CD cartridges positioned so as to rest on their longer side while the second compartments are sized to accommodate double CD cartridges positioned so as to rest on their shorter side. This known system does not allow single and double CD cartridges to be accommodated in any order since two single CD cartridges must always be placed adjacent to each other unless a blank space is left in a row of stored cartridges. Further, in a row of CD cartridges, single and double CD cartridges have different heights.

It is an object of this invention to provide a compact disc storage system which is so arranged that it can accommodate both single and double CD cartridges in any order without leaving any blank space and without any adaptation to be made to the tray or to the cartridges, whereby the cartridges can be tilted to and fro and remain in an oblique parallel position after the operation.

This object is attained according to the invention with a storage system wherein each separation means projects from the bottom part and is so dimensioned that it is effective to separate two adjacent single CD cartridges and that the outer ends thereof can fit in the slot provided in the shorter side of a standard double CD cartridge. Every separation means can be comprised of one or more members. When a single member is used for forming one separation means, the length and width of that single member are smaller than the length and width of the slot in the side of a double CD cartridge. When two or more members are used to define a separation means, the total length between the two outer ends of the arrangement so formed is shorter than the length of the slot in the side of a standard double CD cartridge and obviously the width of the arrangement must be smaller than the width of said slot in a double CD cartridge.

In this manner, both single and double CD cartridges can be accommodated in any order in the tray. And it is further emphasized that since any CD cartridge whether single or double, is able of resting on its shorter side thereof such that all the cartridges when stored in the tray, have the same height.

Preferably, the separation means have different thicknesses thereby to allow compensation for any variation in thickness between two single CD cartridges and one double CD cartridge. In a particular embodiment, separation means having two different thicknesses are used alternately.

Advantageously, the separation means have outer ends formed with different thicknesses. Preferably, the outer ends have beveled longitudinal sides thereby to allow the CD cartridges to be given a tilt while keeping a parallel arrangement. The bottom part is advantageously provided with small bumps intermediate the separation means, whereby the CD cartridges are allowed to rest onto the bumps when in a tilted position and to be easily tilted to and fro.

The system of the invention can be used in any casing, e.g. a rack, a drawer or the like.

For a better understanding of the invention reference is made to the following drawings and description.

In the drawings :
- Fig. 1 shows an elevational view of a preferred embodiment of the storage system according to this invention.
- Fig. 2 shows the system of Fig. 1 with both single and double CD cartridges accommodated therein.
- Fig. 3 is a view similar to Fig. 2 but showing the CD cartridges when having been tilted to the left.
- Figs. 4, 5, 6 and 7 are plan views showing various lay-outs for the separation means.

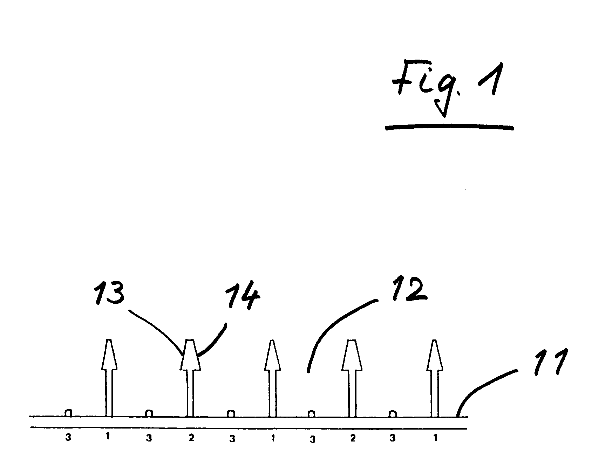

Referring to Fig. 1 there is shown a first exemplary embodiment of the storage system in accordance with this invention. The system, generally referred to by reference numeral 10, comprises a tray-shaped bottom part 11 which is provided with a number of equidistant parallel separation means denoted 1 and 2. The spacing between two adjacent separation means is about equal to the thickness of a standard single compact disc cartridge so that any compartment 12 defined by two adjacent separation means is sized to slidably accommodate a single CD cartridge.

In the embodiment of Fig. 1 the separation means have the form of upwardly projecting ridges which are so dimensioned that each of them is effective to separate two adjacent CD cartridges and such that the outer end thereof can fit in the slot provided in a lateral side of a double CD cartridge, e.g. in the shorter lateral side of a standard double CD cartridge. The length and width of each rib are smaller than the length and width of the slot in a double CD cartridge.

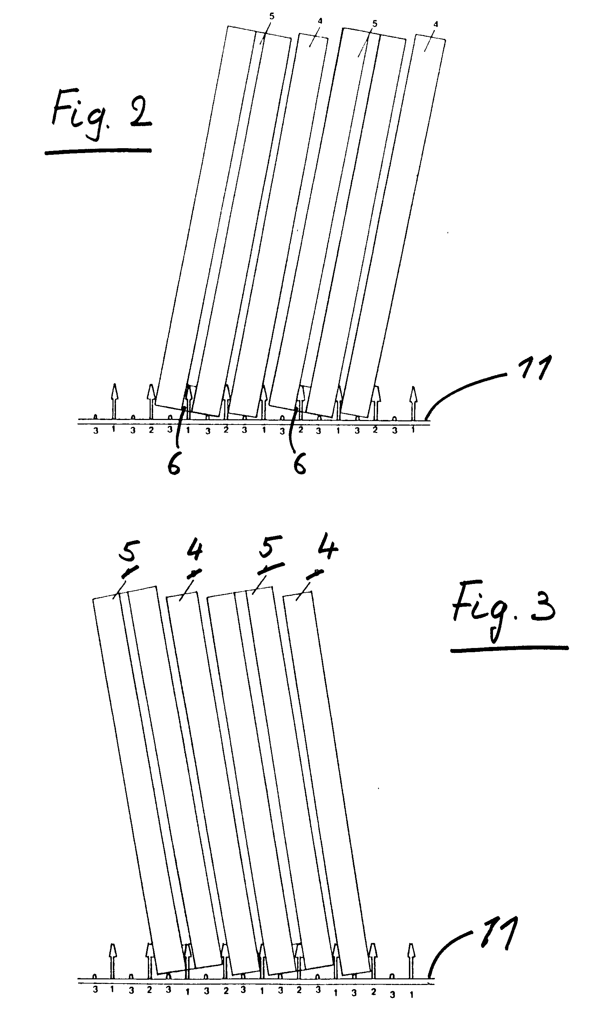

Fig. 2 shows how single and double CD cartridges can be accommodated in the storage system according to the invention. In the drawings, reference numeral 4 denotes single CD cartridges and reference numeral 5 denotes double CD cartridges. Any CD cartridge, either single or double, is slidably inserted in an upright position with the shorter lateral side thereof positioned downwards. A single CD cartridge 4 fits between two adjacent ribs 1 and 2. A double CD cartridge 5 is placed such that the slot 6 provided in its shorter side for instance fits on the outer end of a rib 1 or 2. In this manner, single and double CD cartridges can be accommodated in any order at any location along the tray without leaving any blank space. The CD cartridges are placed in an upright parallel arrangement while showing no difference in height.

In the exemplary embodiment of Figs. 1 to 3 the separation means or ridges have advantageously different thicknesses thereby to compensate for any difference in thickness between two single CD cartridges and one double CD cartridge. Preferably two different thicknesses are used alternately.

As shown in particular in Fig. 1 the outer ends of the projecting ribs 1 and 2 have preferably different widths. Further, these outer ends have beveled longitudinal sides 13, 14, thereby to allow the CD cartridges to be given a tilt while keeping a parallel arrangement. The inclination of the beveled sides 13 and 14 relative to a plane perpendicular to the bottom part 11 defines the degree of tilt which can be given to the cartridges (Figs. 2 and 3).

Advantageously, the bottom part 11 is provided with small bumps 3 intermediate the ridges 1 and 2, whereby the CD cartridges are allowed to rest onto the bumps when in a tilted position. Further, the bumps 3 make it easy to tilting the CD cartridges to and fro (see Figs. 2 and 3).

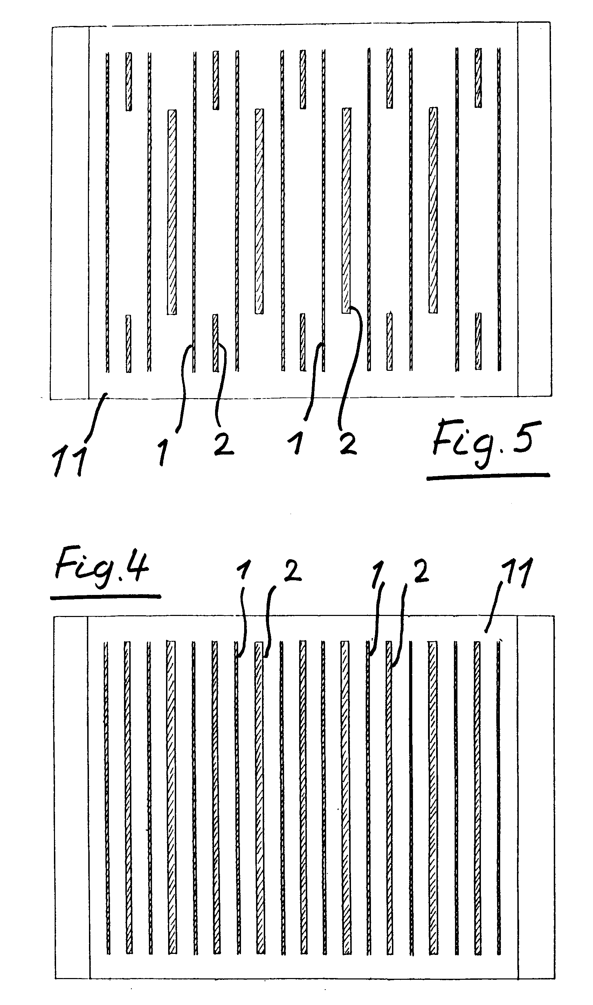

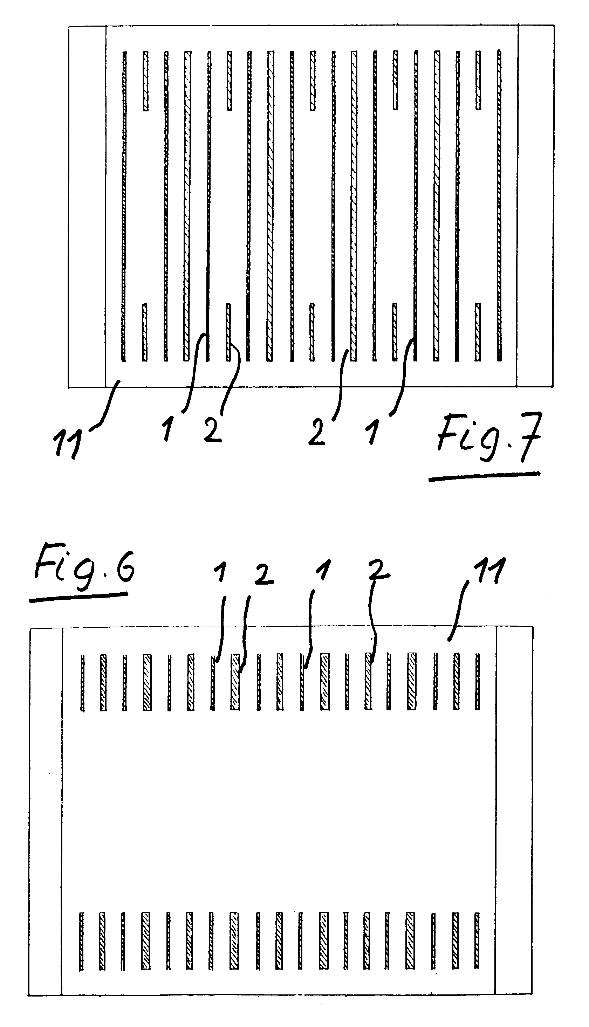

The separation means can be implemented in various embodiments. Fig. 4 shows ribs 1 and 2 being each comprised of one member having a length shorter than the length of the slot in a side of a standard double CD cartridge and having a width smaller than the width of said slot. As shown in Figs. 5, 6 and 7 each rib or at least a portion of the ribs can be comprised of two or more spaced apart members substantially arranged in a line. The total length between the two outer ends of each rib arrangement is shorter than the length of the slot of a standard double CD cartridge and obviously the width of the arrangement must be smaller than the width of said slot.

## Claims

1. Storage system for compact discs, comprising a tray-shaped bottom part (11) provided with separation means forming compartments, each compartment being able to accommodate a single compact disc cartridge in a substantially upright position, the system being able to accommodate both single and double CD cartridges in an oblique parallel position, characterised in that each separation means (1, 2) projects from the bottom part and is so dimensioned that it is effective to separate two adjacent single CD cartridges and that the outer end thereof can fit in the slot provided in the shorter side of a standard double CD cartridge.

2. A system according to claim 1, characterised in that the separation means (1, 2) have different thicknesses.

3. A system according to claim 1 or 2, characterised in that the outer ends of the separation means (1, 2) have different thicknesses.

4. A system according to claim 1, 2 or 3, characterised in that the outer ends of the separation means (1, 2) have beveled longitudinal sides.

5. A system according to either of the preceding claims, characterised in that each separation means comprises at least two spaced apart members.

6. A system according to either of the preceding claims, characterised in that bumps (3) are provided on the tray-shaped bottom part (11) intermediate said separation means (1, 2) whereby cartridges when placed in the tray are allowed to rest on said bumps in a tilted position.

## Patentansprüche

1. Aufbewahrungssystem für Compact-Discs mit einem schalenförmigen Unterteil (11), das zum Bilden von Abteilen mit Trennvorrichtungen versehen ist, wobei jedes Abteil eine Kassette für eine einzelne CD in im wesentlichen aufrechter Stellung aufnehmen kann, und wobei das System CD-Kassetten sowohl für jeweils eine als auch für jeweils zwei CD in einer geneigten, parallelen Stellung aufnehmen kann,
dadurch **gekennzeichnet**, daß jede Trennvorrichtung (1, 2) sich vom Bodenteil (11) aus erstreckt und so bemessen ist, daß sie zwei benachbarte Kassetten für jeweils eine CD voneinander trennen kann und daß ihr äußeres Ende in den Schlitz paßt, der in der kürzeren Seite einer genormten Kassette für zwei CD vorgesehen ist.

2. System nach Anspruch 1,
dadurch **gekennzeichnet**, daß die Trennvorrichtungen (1, 2) unterschiedliche Dicken aufweisen.

3. System nach den Ansprüchen 1 oder 2,
dadurch **gekennzeichnet**, daß die äußeren Enden der Trennvorrichtungen (1, 2) unterschiedliche Dicken aufweisen.

4. System nach einem der Ansprüche 1, 2 oder 3,
dadurch **gekennzeichnet**, daß die äußeren Enden der Trennvorrichtungen (1, 2) geneigte Längsseiten haben.

5. System nach einem der vorangegangenen Ansprüche,
dadurch **gekennzeichnet**, daß jede Trennvorrichtung aus wenigstens zwei, voneinander entfernten Teilen besteht.

6. System nach einem der vorangegangenen Ansprüche,
dadurch **gekennzeichnet**, daß auf dem schalenförmigen Bodenteil (11) zwischen den Trennvorrichtungen (1, 2) Erhöhungen (3) vorgesehen sind, wodurch die Kassetten dann, wenn sie auf dem schalenförmigen Bodenteil angeordnet sind, auf den Erhöhungen in geneigter Stellung aufliegen können.

## Revendications

1. Système de rangement pour disques compacts, comprenant une partie inférieure en forme de plateau (11) pourvue de moyens de séparation formant des compartiments, chaque compartiment étant apte à recevoir une cassette de disque compact simple en position pratiquement debout, le système étant apte à recevoir à la fois des cassettes CD simples et doubles, caractérisé en ce que chaque moyen de séparation (1, 2) fait saillie sur la partie inférieure et est dimensionné de telle manière qu'il sépare l'une de l'autre deux cassettes CD simples adjacentes et de manière que son autre extrémité puisse se loger dans la fente prévue dans le petit côté d'une cassette CD double normalisée.

2. Système suivant la revendication 1, caractérisé en ce que les moyens de séparation (1, 2) ont des épaisseurs différentes.

3. Système suivant la revendication 1 ou 2, caractérisé en ce que les extrémités extérieures des moyens de séparation (1, 2) ont des épaisseurs différentes.

4. Système suivant la revendication 1, 2 ou 3, caractérisé en ce que les extrémités extérieures des moyens de séparation (1, 2) ont des côtés londitudinaux en biseau.

5. Système suivant l'une des revendications précédentes, caractérisé en ce que chaque moyen de séparation comprend au moins deux éléments espacés l'un de l'autre.

6. Système suivant l'une des revendications précédentes, caractérisé en ce que des éminences (3) sont prévues sur le plateau inférieur (11) entre les moyens de séparation (1, 2) de manière que lorsqu'elles sont placées dans le plateau, les cassettes puissent reposer sur les éminences précitées dans une position inclinée.
